# DEMANDE DE BREVET EUROPEEN

(11) **EP 1 038 630 A1**
(43) Date de publication de la demande: **27.09.2000**
(21) Numéro de dépôt: 99500047.8
(22) Date de dépôt: 26.03.1999
(51) Int. Cl.: B23Q 1/54, B23Q 5/10

(54) **Tete de fraisage a deux rotations continues avec actionnement direct**

(71) Demandeur: Industrias Anayak, S.A., 20820 Deba (Guipuzcia) (ES)
(72) Inventeur: Saez Martinez, Jose Ignacio, 20820 Deba (Guipuzcoa) (ES)
(74) Mandataire: Urizar Barandiaran, Miguel Angel

(57) **Abrégé**

Tête de fraisage à deux rotations continues avec actionnement direct, de celles qui se composent de chariot, tête et broche principale, sur laquelle :
a) la tête est un élément modulaire et dispose d'un premier et d'un second axe de rotation supplémentaires, pour convertir une fraiseuses ou centre d'usinage à trois axes en un centre à cinq axes;
b) on dispose un premier moteur accouplé directement sur le premier axe de rotation supplémentaire avec son stator fixe sur le chariot et son moteur fixe sur la tête; et
c) on dispose un second moteur accouplé directement sur le second axe de rotation.

Le premier et second moteur sont des moteurs plats à haut couple avec une gamme basse de vitesses; notamment des servomoteurs directs, sans aucune réduction ou transmission intermédiaire.

Application en machine-outil.

## Description

L'objectif de la présente invention est une tête qui fournit deux rotations supplémentaires continues à l'outil pour convertir une fraiseuse ou centre d'usinage à trois axes en un à cinq axes. Cette solution permet de transformer une fraiseuse verticale conventionnelle en une fraiseuse à cinq axes, tous ces derniers sur l'outil.

Les rotations supplémentaires que procure la tête de l'invention sont, pour l'une, parallèle à la table et, pour l'autre, perpendiculaire à cette dernière.

Traditionnellement ces rotations de l'outil ont été générées par des moteurs, placés dans la partie supérieure du coulisseau, accompagnés de transmissions pour fournir la rotation à la pointe de l'outil.

La solution adoptée par cette tête est l'utilisation de moteurs directs de couple élevé avec des gammes de vitesses relativement basses, ce qui permet la mise en place ou l'accouplement des moteurs directement sur l'axe de rotation, en procurant une solution plus compacte.

Cette tête est un élément modulaire susceptible d'être pris en compte comme un accessoire pour la machine.

Dans la présente invention, on a utilisé des moteurs plats de couple élevé avec une gamme basse de vitesses; notamment des servomoteurs directs, sans aucune réduction ou transmission intermédiaire, qui produisent les mouvements rotatifs en procurant une bonne maîtrise et une haute dynamique à l'ensemble.

Les avantages ou prestations dynamiques obtenues par l'invention aussi bien en accélérations qu'en vitesses limite supposent un accroissement pouvant aller jusqu'à 100% par rapport aux têtes actuellement connues.

La présente invention préconise une tête de fraisage à deux rotations avec actionnement direct, de celles qui disposent de chariot, tête et broche principale, et se caractérise par le fait que la tête est un élément modulaire et dispose d'un premier et d'un second axe de rotation supplémentaires, pour convertir une fraiseuses ou centre d'usinage à trois axes en un à cinq axes; puisque l'on dispose un premier moteur accouplé directement sur le premier axe de rotation supplémentaire avec son stator fixe sur le chariot et son rotor fixe sur la tête; et que l'on dispose d'un second moteur accouplé directement sur le second axe de rotation.

Elle se caractérise également par le fait que le premier et second moteur sont des moteurs plats à couple élevé avec une gamme basse de vitesses; notamment des servomoteurs directs, sans aucune réduction ou transmission intermédiaire.

Cette tête est conçue pour être appliquée sur des fraiseuses et des centres d'usinage de taille moyenne ou de grande taille, sur lesquels on a besoin de travailler avec cinq axes. Ces machines doivent être équipées de contrôles numériques à hautes prestations ayant la capacité d'interpoler cinq axes simultanément.

Elle s'appliquera de préférence sur des centres d'usinage verticaux, mais il y aura également la possibilité de l'implanter sur des centres horizontaux.

Les avantages que fournit la solution proposée par la tête de fraisage à deux rotations continues avec actionnement direct faisant l'objet de l'invention sont :
- . Simplification de la conception par l'élimination des transmissions mécaniques.
- . Solution plus compacte, réduisant au minimum volume et poids.
- . Haute rigidité de la tête par rapport à la solution conventionnelle.
- . Plus grande fiabilité inhérente à la réduction du nombre de composants.
- . Elimination des chaînes de transmission.
- . Elimination de l'hystérésis mécanique.
- . Accélération angulaire élevée dans la mesure où celle-ci est en correspondance directe avec celle du moteur.
- . Diminution de l'inertie.

Pour mieux comprendre l'objet de la présente invention, on a représenté sur les plans une forme préférentielle de réalisation pratique, susceptible de changements accessoires qui n'en altèrent guère le fondement.

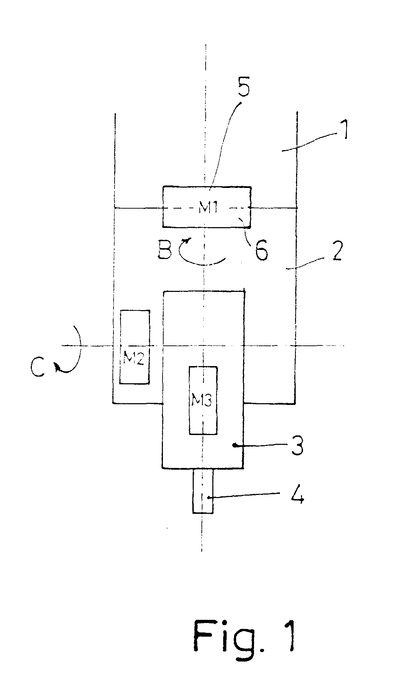

La figure 1 est une représentation schématique d'une réalisation pratique de la tête faisant l'objet de l'invention.

On trouvera décrit, ci-après, un exemple de réalisation pratique, non limitative, de la présente invention.

On a représenté, sur la figure 1, en mode coaxial, le chariot (1), la tête (2) et la broche principale (3).

On a connaissance de machines fraiseuses qui possèdent un chariot (1) doté de mouvement sur trois axes et une tête (2) avec mouvement sur deux autres axes supplémentaires (B), (C).

Pour le mouvement de l'axe supplémentaire (B), on dispose en mode conventionnel d'un premier moteur (M'1) (non représenté) disposé sur le chariot (1) et d'un second moteur (M'2) (non représenté) disposé sur le chariot (2), ce qui oblige à disposer d'un complexe de transmissions entre l'un et l'autre et les axes correspondants de rotation pour que l'outil (4) obtienne les mouvements désirés.

On peut apprécier sur la figure 1 que d'après l'invention, le premier moteur (Ml) pour obtenir la rotation supplémentaire se dispose avec son stator (5) fixe au chariot (1) et avec le rotor (6) fixe à la tête (2) et sur l'axe (B) même de la rotation supplémentaire.

Le second moteur (M2) est disposé sur la tête (2) en coaxiale ou sur le propre axe (C) de la rotation supplémentaire à obtenir.

On appréciera qu'avec cette disposition disparaissent les transmissions, ce qui permet d'améliorer de manière substantielle les prestations dynamiques de la machine.

Les moteurs premier et second (M1), (M2) sont des moteurs plats à couple élevé ayant une gamme basse de vitesses qui, ainsi qu'il a été dit plus haut, s'accouplent directement sur l'axe de rotation (B), (C) correspondant en offrant une solution plus compacte.

Les moteurs premier et second (Ml), (M2) notamment sont des servomoteurs directs et les gammes de vitesses employés sont relativement basses, jusqu'à 120 t. m.

Les rotations ou axes (B) ( C) supplémentaires sont, pour l'un, parallèles à la table de travail (non représenté) et, pour l'autre, perpendiculaires à celle-ci. En conséquence, les servomoteurs (Ml), (M2) sont placés de manière coaxiale et radiale avec l'électromandrin.

Il a été prévu également que dans un plan coaxial à la broche principale (3) se trouvera le moteur principal (M3) ou électromandrin.

## Revendications

1. Tête de fraisage à deux rotations continues avec actionnement direct, de celles qui se composent d'un chariot, une tête et une broche principale, en se caractérisant par le fait que la tête est un élément modulaire et dispose d'un premier et second axe de rotation supplémentaire, ce qui permet de convertir une fraiseuse ou centre d'usinage à trois axes en un centre à cinq axes; puisque l'on dispose d'un premier moteur accouplé directement sur le premier axe de rotation supplémentaire avec son stator fixe sur le chariot et son rotor fixe sur la tête; et que l'on dispose d'un second moteur accouplé directement sur le second axe de rotation.

2. Tête de fraisage à deux rotations continues avec actionnement direct, selon revendication antérieure, se caractérisant en ce que le premier et second moteur sont des moteurs plats à haut couple avec une gamme basse de vitesses; en particulier des servomoteurs directs, sans aucune réduction ou transmission intermédiaire.
